# DEMANDE DE BREVET EUROPEEN

(11) **EP 3 650 681 A1**
(43) Date de publication de la demande: **13.05.2020**
(21) Numéro de dépôt: 19208182.6
(22) Date de dépôt: 08.11.2019
(51) Int. Cl.: F02M 26/15, F01N 3/02, F01N 5/02

(54) **REFROIDISSEUR EGR ANNULAIRE VERTICAL AVEC ENTREE HAUTE**

(30) Priorité: 09.11.2018 FR 1871432
(71) Demandeur: RENAULT s.a.s., 92100 Boulogne-Billancourt (FR)
(72) Inventeur: DUMAS, Eric, 78800 HOUILLES (FR)

(57) **Abrégé**

Ligne d'échappement (10) de moteur à combustion interne comportant un système de dépollution (50) connecté à un échangeur (11) de chaleur d'une ligne de recirculation des gaz brulés, ledit système de dépollution (50) dirigeant les gaz brulés vers une paroi de réception (14) présentant un orifice central (15) débouchant dans un conduit d'extraction (12) des gaz brulés vers l'extérieur du véhicule,
caractérisé en ce que ladite paroi de réception (14) comprend une ouverture de recirculation (16) des gaz distincte de l'orifice central (15) et débouchant directement dans l'échangeur de chaleur (11).

## Description

### Domaine technique de l'invention

La présente invention concerne un moteur à combustion interne de véhicule automobile.

La présente invention concerne un système d'échappement du moteur à combustion interne comportant un système de dépollution des gaz brulés.

La présente invention concerne plus particulièrement un système de refroidissement des gaz brulés recirculés vers l'admission d'air du moteur.

### Etat de la technique

De manière connue, les moteurs à combustion interne comportent un circuit d'échappement de gaz brulés connecté à une sortie d'échappement dudit moteur. Pour réduire les rejets de polluants à l'extérieur du véhicule, les lesdits moteurs à combustion interne sont connectés à des systèmes de dépollution disposés dans la ligne d'échappement du moteur. Lesdits systèmes comprennent un catalyseur ou un filtre à particules. On appelle ligne d'échappement d'un moteur tout le circuit des gaz brulés issus du moteur depuis des soupapes d'échappement.

Pour réduire des rejets de polluants générés par la combustion, il est connu de ramener des gaz brulés à l'échappement c'est-à-dire en aval de la combustion dans les cylindres, vers les conduits d'admission. On a ainsi différents types de gaz brulés recirculés :
- des gaz recirculés haute pression prélevés depuis le circuit d'échappement en amont selon le sens d'écoulement des gaz de dispositifs de dépollution comme par exemple un catalyseur ou piège à oxyde d'azote (Nox). De manière générale, les gaz brulés recirculés haute pression sont prélevés directement depuis un collecteur d'échappement fixé à une face d'échappement de la culasse, du côté latéral opposé à la face d'admission. Les gaz recirculés haute pression sont envoyés ensuite vers les conduits d'admission ou dans le répartiteur d'admission.
- des gaz brulés recirculés basse pression prélevés dans le circuit d'échappement et de manière connue après un dispositif de dépollution. Lesdits gaz recirculés basse pression sont renvoyés de manière connue dans le circuit d'admission en amont du compresseur. Ils sont alors mélangés avec l'air frais capté en face avant du véhicule.

Les gaz brulés recirculés basse pression doivent être refroidis avant le mélange avec l'air frais notamment avant d'atteindre une vanne dite vanne EGR apte à contrôler le débit de gaz brulés dans le mélange avec l'air frais. La ligne d'échappement peut donc comprendre un refroidisseur des gaz brulés disposé en aval des dispositifs de dépollution. Le refroidisseur est généralement formé par un échangeur de chaleur eau/gaz au travers duquel les gaz ici brulés cèdent une partie de leur chaleur à un liquide de refroidissement à base d'eau.

Il est connu de disposer un tel échangeur dans une branche de recirculation de gaz brulés connectée à la ligne d'échappement par un raccord de déviation généralement en T.

La publication FR2930296-A1 propose ainsi un échangeur disposé dans une boucle de recirculation de gaz brulés en aval d'un système de dépollution de moteur à combustion interne. L'encombrement de l'ensemble peut être très important et va à l'encontre de la tendance de la réduction du volume du compartiment moteur du véhicule dans lequel sont mis en place le moteur avec tous les systèmes nécessaires au fonctionnement du moteur ainsi que les systèmes de dépollution dont fait partie l'échangeur de chaleur de gaz brulés basse pression.

Le but de l'invention est de remédier à ces problèmes et un des objets de l'invention est un échangeur de chaleur coopérant avec un système de dépollution de gaz d'échappement produits par un moteur à combustion interne.

### Présentation de l'invention

La présente invention concerne plus particulièrement une ligne d'échappement de moteur à combustion interne comportant un système de dépollution connecté à un échangeur de chaleur d'une ligne de recirculation des gaz brulés, ledit système de dépollution dirigeant les gaz brulés vers une paroi aval présentant un orifice central débouchant dans un conduit d'extraction des gaz brulés vers l'extérieur du véhicule,
caractérisée en ce que ladite paroi aval comprend des premiers orifices de sortie des gaz distincts de l'orifice central et débouchant directement dans l'échangeur de chaleur.

De manière avantageuse, la paroi aval du système de dépollution comporte des premiers orifices distincts de l'orifice central apte à diriger les gaz brulés vers un conduit d'extraction vers l'extérieur du véhicule, traversant ladite paroi et débouchant directement dans l'échangeur de chaleur ce qui réduit l'encombrement global de la ligne d'échappement du moteur comportant une ligne de recirculation des gaz.

Selon d'autres caractéristiques de l'invention :
- les premiers orifices sont agencés en périphérie de la paroi aval, entourant l'orifice central.

De manière avantageuse, les premiers orifices sont répartis en périphérie de la paroi aval de façon sensiblement uniforme pour optimiser les débits de gaz brulés traversant l'échangeur.
- la paroi aval est conique.

De manière avantageuse, la paroi aval est sensiblement conique pour optimiser les pertes de charges au passage de ladite paroi.
- l'échangeur présente une forme annulaire.

De manière avantageuse, l'échangeur de chaleur est de forme annulaire pour réduire l'encombrement de l'ensemble.
- l'échangeur entoure le conduit d'extraction des gaz brulés.
- l'échangeur de chaleur est séparé et distant du conduit d'extraction.

De manière avantageuse, l'échangeur de chaleur est séparé du conduit d'extraction pour permettre un refroidissement optimal des gaz brulés renvoyés vers l'admission d'air du moteur.
- l'échangeur de chaleur est séparé et distant du conduit d'extraction par une paroi d'isolation tubulaire entourant le conduit d'extraction.

De manière avantageuse, l'échangeur de chaleur est séparé du conduit d'extraction par une paroi d'isolation entourant le conduit d'extraction pour améliorer l'isolation entre l'échangeur et les gaz brulés destinés à être extraits vers l'extérieur du véhicule. De ce fait, les performances de l'échangeur sont principalement utilisées pour le refroidissement des gaz brulés recirculés.
- l'échangeur comprend un conduit de recirculation s'étendant sensiblement radialement pour diriger les gaz brulés vers la ligne de recirculation.

De manière avantageuse, l'échangeur comprend un conduit de recirculation s'étendant sensiblement radialement et apte à diriger les gaz brulés refroidis vers la ligne de recirculation. De manière préférentielle, ledit conduit peut être disposé en aval de l'échangeur selon le sens d'écoulement des gaz brulés.
- l'échangeur comporte des conduits radiaux d'entrée et de sortie connectés au circuit de refroidissement du moteur.

De manière avantageuse, l'échangeur comporte un premier conduit radial d'entrée de liquide de refroidissement et un second conduit radial de sortie, lesdits conduits radiaux sont connectés à un circuit de refroidissement du moteur. De manière préférentielle, le premier conduit d'entrée est agencé en aval du second conduit radial de sortie selon le sens d'écoulement des gaz pour permettre une optimisation du refroidissement des gaz brulés recirculés.
- l'échangeur comporte un orifice de purge connecté au conduit d'extraction pour l'évacuation des condensats.

De manière avantageuse, l'échangeur comprend un orifice de purge destiné à l'évacuation des condensats produits dans l'échangeur, ledit orifice de purge est de manière préférentielle connecté au conduit d'extraction pour permettre une vaporisation desdits condensats et leur élimination dans la ligne d'échappement.
- la paroi aval, le conduit d'extraction et la paroi isolante sont parties de l'échangeur de chaleur.

De manière avantageuse, l'échangeur permet la division du flux de gaz brulés en des gaz brulés recirculés et des gaz brulés rejetés vers l'extérieur du véhicule grâce à la paroi aval et au conduit d'extraction et un refroidissement optimal des gaz brulés recirculés par une isolation entre les deux flux de gaz autorisée par la paroi isolante.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique de l'extrémité aval du système de dépollution avec un échangeur de chaleur.
[Fig. 2] est une vue schématique de coupe longitudinale de ladite extrémité aval du système de dépollution et de l'échangeur.
[Fig. 3] est une vue schématique de la paroi aval à l'extrémité amont de l'échangeur.
[Fig. 4] est une vue schématique de l'extrémité amont de l'échangeur.
[Fig. 5] est une vue schématique de coupe longitudinale de l'extrémité aval de l'échangeur de chaleur.
[Fig. 6] est une vue schématique de coupe longitudinale de l'extrémité aval de l'échangeur de chaleur avec un orifice de purge.

### Description détaillée des figures

Dans la description qui va suivre, des chiffres de référence identiques désignent des pièces identiques ou ayant des fonctions similaires.

Les termes amont/aval sont relatifs au sens d'écoulement des gaz. De même les termes haut/bas se réfèrent à un axe vertical parallèle à l'axe orthogonal au plan du véhicule qui comprend les axes des essieux du véhicule.

De manière connue, un moteur à combustion comporte une face échappement notamment d'une culasse dudit moteur, par laquelle sortent des gaz brulés générés lors du fonctionnement dudit moteur. Contre ladite face échappement est fixée une ligne d'échappement du moteur qui comporte principalement et successivement selon les sens d'écoulement des gaz un collecteur d'échappement, un système de dépollution et un conduit d'extraction des gaz vers l'extérieur du véhicule. Ledit système de dépollution peut comprendre un catalyseur, un filtre à particule, un piège à Nox. Pour réduire les rejets de polluants, une partie des gaz brulés peuvent être renvoyés à l'admission du moteur et mélangés avec de l'air frais, lesdits gaz sont appelés gaz brulés recirculés.

Ces gaz brulés recirculés peuvent être piqués de la ligne d'échappement en différents endroits. On distingue ainsi :
- les gaz brulés recirculés haute pression prélevés au niveau du collecteur d'échappement,
- les gaz brulés basse pression prélevés en aval du système de dépollution.

L'invention concerne les gaz brulés basse pression prélevés selon le mode de réalisation présenté en aval du système de dépollution qui est ici un catalyseur.

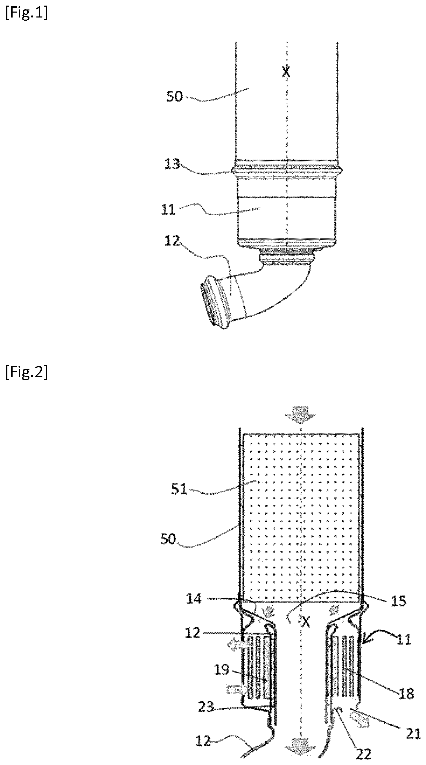

Selon la figure 1, la ligne d'échappement 10 comprend un système de dépollution 50 ici un catalyseur et un échangeur de chaleur 11. L'extrémité aval 51 du système de dépollution 50 est connecté directement à l'échangeur de chaleur 11. En aval de l'échangeur, débouche un conduit d'extraction 12 de gaz brulés pour amener et évacuer les gaz brulés vers l'extérieur du véhicule. Le catalyseur 50 et l'échangeur sont de manière préférentielle de forme cylindrique.

Dans la suite de description et afin de faciliter la compréhension, le système de dépollution est monté sur le véhicule selon un axe sensiblement vertical ou proche de l'axe vertical orthogonal au plan du véhicule. Les gaz brulés sont ainsi dirigés vers le bas au passage dans ledit système de dépollution.

L'échangeur 11 est fixé au catalyseur 50 dans le prolongement dudit catalyseur par une liaison annulaire 13 qui peut être un collier V-band.

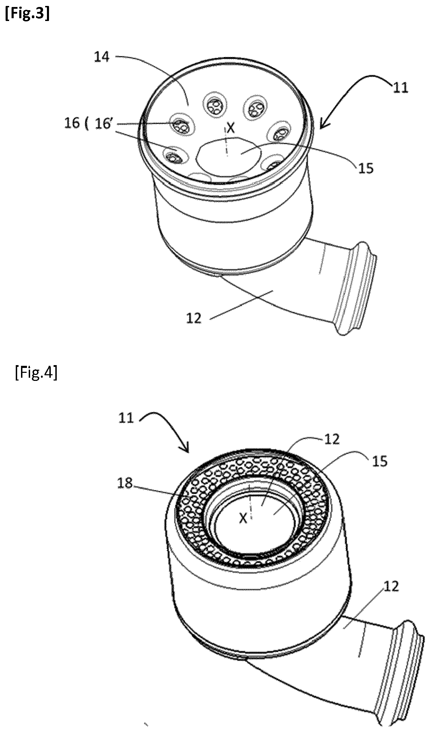

Selon les figures 2 et 3, le catalyseur 50 comprend un pain de catalyse 52 traversé par les gaz brulés qui sont ensuite recueillis par une paroi de réception 14 conique sensiblement de révolution.

La paroi de réception conique 14 comporte un orifice central 15 et au moins une ouverture dite de recirculation 16 agencée en périphérie de ladite paroi de réception et entourant l'orifice central 15 entourant l'axe X de ladite paroi de réception 14. L'ouverture de recirculation 16 telle représentée en figure 2 selon un mode de réalisation est composée de plusieurs orifices de recirculation 16 percés dans la paroi aval. L'orifice central 15 présente une section de passage plus importante que celle des orifices de recirculation 16'. L'orifice central 15 est destiné à être traversé par les gaz brulés pour être ensuite évacués vers l'extérieur du véhicule. Les orifices de recirculation 16' sont destinés à être traversés par des gaz brulés recirculés pour être renvoyés ensuite vers une ligne de recirculation jusqu'à l'admission d'air du moteur. Les orifices de recirculation 16' sont sensiblement uniformément répartis selon une couronne périphérique 17 entourant l'orifice central 15. Selon un autre mode de réalisation, l'ouverture de recirculation 16 peut être formée par une ouverture annulaire en périphérie de la paroi de réception 14 conique. L'ouverture de recirculation 16 autorise un passage des gaz brulés issus du système de dépollution 50 dans l'échangeur 11 avec une diffusion sensiblement uniforme à l'entrée de l'échangeur.

Ainsi, les orifices de recirculation 16' traversent la paroi de réception 52 et débouchent directement dans l'échangeur de chaleur 11. Ledit échangeur 11 est de forme annulaire et comprend selon un mode de réalisation des tubes longitudinaux 18 de conduite des gaz parallèles à l'axe longitudinal X de l'échangeur. Lesdits tubes sont plongés dans une chambre 19 remplie par du liquide de refroidissement. Pour cela, l'échangeur 11 comprend un conduit radial d'entrée et un conduit radial de sortie (non représentés) qui sont connectés à un circuit de refroidissement du moteur. De manière préférentielle, le conduit radial d'entrée est agencé longitudinalement en aval du conduit radial de sortie de liquide comme représenté en figure 2 pour optimiser le refroidissement des gaz brulés recirculés. Les gaz brulés recirculés sont ainsi refroidis au passage dans lesdits tubes longitudinaux 18.

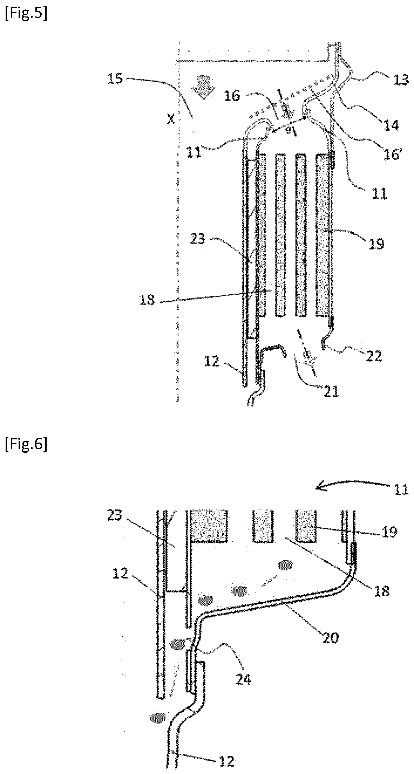

Après leur passage au travers des tubes longitudinaux 18, les gaz brulés recirculés sont recueillis par une paroi de sortie 20 en forme de cuvette. Selon les figures 4 à 6, ladite paroi de sortie 20 peut être conique et comporte une ouverture 21 débouchant dans un conduit de recirculation 22 qui s'étend sensiblement radialement par rapport à l'axe X de l'échangeur 11 pour diriger les gaz brulés vers la ligne de recirculation (non représentée). De manière préférentielle, l'axe Xi du conduit de recirculation 22 au niveau de la paroi de sortie 20 est sensiblement oblique par rapport à l'axe X de l'échangeur 11 comme représenté dans les figures 5 et 6. Le changement d'orientation de l'écoulement des gaz brulés recirculés par rapport à l'axe X de l'échangeur permet de se débarrasser des condensats dans les gaz recirculés. Le conduit de recirculation 22 est connecté à la ligne de recirculation des gaz brulés vers l'admission du moteur à combustion interne.

L'échangeur de chaleur 11 de forme annulaire entoure un conduit d'extraction sensiblement tubulaire 12 comme représenté en figures 2 et 5 qui traverse longitudinalement l'échangeur 11. L'orifice central 15 de la paroi de réception 52 débouche directement dans ledit conduit d'extraction 12. Le conduit d'extraction débouche ensuite de la paroi de sortie 20 de l'échangeur 11. Les gaz brulés destinés à être rejetés hors du véhicule sont dirigés via l'orifice central 15 dans le conduit d'extraction 12 connecté en aval à un tuyau d'échappement (non représenté) de la ligne d'échappement.

Pour optimiser le refroidissement des gaz recirculés et éviter de refroidir les gaz brulés destinés à être rejetés, l'échangeur de chaleur 11 est isolé thermiquement du conduit d'extraction 12. De manière avantageuse, l'échangeur 11 est séparé du conduit d'extraction sur toute la longueur dudit conduit entourée par l'échangeur. Pour être plus clair, la paroi de l'échangeur 11 en vis-à-vis du conduit d'extraction peut être distante, du conduit d'extraction 12 ou sans contact avec ledit conduit, sur toute la longueur du conduit entourée par l'échangeur 11. Selon un mode de réalisation présenté dans les figures 5 et 6, l'isolation peut comprendre une paroi isolante 23 séparant l'échangeur 11 du conduit d'extraction 12. La paroi isolante 23 est tubulaire et recouvre le tube d'extraction 12 au-moins sur toute sa longueur entourée par l'échangeur 11. La paroi isolante tubulaire de manière préférentielle est composée d'un isolant étanche en fibre minérale synthétique.

De façon remarquable, l'échangeur comporte un orifice de purge 24 disposé de façon préférentielle au niveau le plus bas de la paroi de sortie 20, l'orifice de purge 24 présente une faible section de passage apte à autoriser le passage de condensats au travers de ladite section de passage. Comme présenté dans la figure 6, l'orifice de purge 24 traverse la paroi isolante 23 ainsi que le conduit d'extraction 12 et permet une communication entre l'extrémité aval de la paroi de sortie 20 de l'échangeur avec le conduit d'extraction 12. Ainsi, lors de la formation de condensats dans l'échangeur 11, lesdits condensats sont poussés vers l'orifice de purge 24 disposé au niveau aval le plus bas de la paroi de sortie 20 de l'échangeur pour être ensuite renvoyés et éliminés dans le conduit d'extraction 12.

De manière préférentielle, la paroi de réception 14 aval, le conduit d'extraction 12 avec la paroi isolante 23, et la paroi de sortie 20 sont parties de l'échangeur 11. Ledit échangeur est alors facilement fixé à l'extrémité aval du catalyseur 50 par la liaison annulaire. Les gaz brulés issus du catalyseur sont répartis entre l'échangeur et le conduit d'extraction, les gaz brulés passant par l'échangeur sont refroidis et renvoyés ensuite vers l'admission du moteur, le refroidissement étant isolé du conduit d'extraction pour réduire les transferts de chaleur entre les gaz dans le conduit d'extraction 12 et l'échangeur 11, et pouvant générer des condensats qui sont renvoyés dans la ligne d'échappement pour être éliminés.

L'objectif est atteint : l'encombrement de la ligne d'échappement comprenant un système de dépollution 50 et un échangeur de chaleur 11 fixé à la sortie dudit système de dépollution et dans son prolongement est réduit, ledit échangeur permettant d'une part la division des gaz brulés entre les gaz brulés destinés à être évacués à l'extérieur du véhicule et les gaz brulés recirculés renvoyés à l'admission du moteur après refroidissement.

Comme il va de soi, l'invention ne se limite pas aux seules formes d'exécution de cette prise, décrites ci-dessus à titre d'exemples, elle en embrasse au contraire toutes les variantes.

Selon un mode de réalisation, le volume efficace de l'échangeur est de l'ordre de 1 litre.

La paroi d'isolation 23 peut être partie de la paroi de la chambre 19 de liquide de refroidissement de l'échangeur 11.

## Revendications

1. Ligne d'échappement (10) de moteur à combustion interne comportant un système de dépollution (50) connecté à un échangeur (11) de chaleur d'une ligne de recirculation des gaz brulés, ledit système de dépollution (50) dirigeant les gaz brulés vers une paroi de réception (14) présentant un orifice central (15) débouchant dans un conduit d'extraction (12) des gaz brulés vers l'extérieur du véhicule,
**caractérisée en ce que** ladite paroi de réception (14) comprend une ouverture de recirculation (16) des gaz distincte de l'orifice central (15) et débouchant directement dans l'échangeur de chaleur (11).

2. Ligne d'échappement (10) selon la revendication 1, **caractérisée en ce que** l'ouverture de recirculation (16) est agencée en périphérie de la paroi de réception (14), entourant l'orifice central (15).

3. Ligne d'échappement (10) selon l'une quelconque des revendications 1 à 2, **caractérisée en ce que** la paroi de réception (14) est conique.

4. Ligne d'échappement (10) selon l'une quelconque des revendications 1 à 3, **caractérisée en ce que** l'échangeur (11) présente une forme annulaire.

5. Ligne d'échappement (10) selon la revendication 4, **caractérisée en ce que** l'échangeur (11) entoure le conduit d'extraction (12) des gaz brulés.

6. Ligne d'échappement (10) selon l'une quelconque des revendications 1 à 5, **caractérisée en ce que** l'échangeur de chaleur (11) est distant du conduit d'extraction (12).

7. Ligne d'échappement selon la revendication 6, **caractérisée en ce que** l'échangeur de chaleur (11) est séparé du conduit d'extraction par une paroi d'isolation (23) tubulaire entourant le conduit d'extraction (12).

8. Ligne d'échappement (10) selon l'une quelconque des revendications 1 à 7, **caractérisée en ce que** l'échangeur (11) comprend un conduit de recirculation (22) s'étendant sensiblement radialement depuis une paroi de sortie (20) de l'échangeur (11) pour diriger les gaz brulés vers la ligne de recirculation.

9. Ligne d'échappement (10) selon l'une quelconque des revendications 1 à 8, **caractérisée en ce que** l'échangeur (11) comporte des conduits radiaux d'entrée et de sortie connectés au circuit de refroidissement du moteur.

10. Ligne d'échappement (10) selon l'une quelconque des revendications 1 à 9, **caractérisée en ce que** l'échangeur (11) comporte un orifice de purge (24) connecté au conduit d'extraction (12) pour l'évacuation des condensats.

11. Ligne d'échappement (10) selon l'une quelconque des revendications 1 à 9, **caractérisée en ce que** la paroi de réception (14), le conduit d'extraction (12) et la paroi isolante (23) sont parties de l'échangeur de chaleur.
